# FASCICULE DE BREVET EUROPEEN

(11) **EP 3 390 961 B1**
(45) Date de publication et mention de la délivrance du brevet: **09.03.2022**
(21) Numéro de dépôt: 16801143.5
(22) Date de dépôt: 02.11.2016
(51) Int. Cl.: G01B 11/245, G01B 11/25

(54) **DISPOSITIF DE CONTRÔLE TRIDIMENSIONNEL SANS CONTACT DE PALE POUR TURBOMACHINE, EN PARTICULIER POUR RÉACTEUR OU TURBINE D'AÉRONEF**
VORRICHTUNG ZUR BERÜHRUNGSLOSEN DREIDIMENSIONALEN INSPEKTION VON SCHAUFELN FÜR TURBOMASCHINEN, INSBESONDERE FÜR FLUGZEUGTURBINEN ODER TRIEBWERKE
DEVICE FOR THE CONTACTLESS THREE-DIMENSIONAL INSPECTION OF BLADES FOR TURBOMACHINES, PARTICULARLY FOR AIRCRAFT TURBINES OR JET ENGINES

(30) Priorité: 02.11.2015 FR 1560486
(43) Date de publication de la demande: 24.10.2018
(73) Titulaire: DWFritz Automation, Inc., Wilsonville OR 97070 (US)
(72) Inventeur: LE NEEL, Didier, 35770 Vern Sur Seiche (FR)
(74) Mandataire: Murgitroyd & Company
(86) Numéro de dépôt international: PCT/EP2016/076336
(87) Numéro de publication internationale: WO 2017/076853

(56) Documents cités:
- CN-A- 101 458 072
- CN-A- 104 567 679
- JP-A- 2014 202 534

## Description

### 1. DOMAINE DE L'INVENTION

Le domaine de l'invention est celui de la mesure dimensionnelle.

L'invention concerne plus particulièrement un dispositif de contrôle tridimensionnel sans contact d'une pale pour turbomachine, par exemple un réacteur, une turbine, un compresseur ou une pompe.

De manière générale, une turbomachine est une machine, un dispositif ou un appareil qui agit sur un fluide ou qu'actionne un fluide par l'intermédiaire d'un organe rotatif. Un échange d'énergie a lieu entre l'organe rotatif tournant autour de son axe de rotation et un fluide en écoulement permanent. Les turbomachines peuvent être réceptrices (turbines hydrauliques, turbines à gaz (aéromoteurs) par exemple) ou génératrices (réacteur, turbine aérodynamique, pompes centrifuges, compresseurs, soufflantes, hélices propulsives par exemple).

L'invention s'applique notamment, mais non exclusivement, aux techniques de contrôle de pales utilisées dans le domaine de l'aéronautique (pour assurer la propulsion d'un aéronef par exemple), dans le domaine naval (pour assurer la propulsion d'un navire par exemple). Il peut également s'appliquer aux techniques de contrôle de pales utilisées dans le domaine de l'énergie aérodynamique ou hydrodynamique (pour transformer l'énergie de déplacement d'un fluide en énergie motrice).

### 2. ARRIÈRE-PLAN TECHNOLOGIQUE

On s'attache plus particulièrement dans la suite de ce document à décrire la problématique existant dans le domaine des réacteurs d'aéronefs, à laquelle ont été confrontés les inventeurs de la présente demande de brevet. L'invention ne se limite bien sûr pas à ce domaine particulier d'application, mais présente un intérêt pour toute technique de contrôle de pale pour turbomachine devant faire face à une problématique proche ou similaire.

Les pales de réacteurs, de turboréacteurs ou encore de turbines sont des pièces mécaniques largement utilisées pour des applications aéronautiques. Elles ont pour fonction de permettre de transmettre de l'énergie cinétique à un fluide (gaz) lorsqu'elle est couplée à un moteur et ainsi de propulser l'aéronef.

Un turboréacteur par exemple se compose généralement d'un ensemble de pales concourantes sur un axe de rotation et disposées dans un plan sensiblement perpendiculaire à cet axe. Le nombre de pales varie selon les applications.

Lors de leur fabrication, les pales doivent être réalisées avec une très grande précision dans leurs dimensions ou leur forme, et de qualité convenable et constante.

Il convient donc de prévoir un contrôle dimensionnel de chacune de ces pièces afin de savoir si elles respectent bien les tolérances de fabrication requises. Un tel contrôle est généralement effectué sur la chaine de fabrication et implique un certain nombre de caractéristiques dimensionnelles.

Une solution classique consiste à contrôler ces pièces en sortie de fabrication soit manuellement soit en utilisant des machines de contrôle dimensionnelle automatisé, telles que les machines de palpation mécanique. Ces dernières permettent d'acquérir les dimensions et la forme d'une pièce, puis de les contrôler.

Toutefois, l'inspection visuelle des pièces ne répond ni aux cadences de production élevées, ni aux exigences de qualité requises en aéronautique, certains défauts restant difficilement repérables à l'œil nu.

Les solutions de palpage mécanique par ailleurs requièrent un processus de contrôle discontinu, qui nécessite un temps de contrôle relativement long. De plus, les pales d'hélice peuvent présenter une forme et un profil relativement complexes rendant le processus de contrôle difficile, nécessitant l'utilisation de machines distinctes pour permettre un contrôle de l'intégralité des caractéristiques dimensionnelles de ces pièces. De plus les systèmes de contrôle sans contact actuels ne permettent pas d'atteindre les précisions et les cadences imposées par l'industrie manufacturière.

CN 104567679 A présente un dispositif de mesure 3D d'une pale de turbomachine comprenant un module de mesure laser par triangulation, un moyen d'entraînement en rotation de la pale, un moyen d'entraînement en translation du module laser et des moyens de construction d'une représentation 3D de la pale à partir des données du module de mesure laser.

Il serait donc souhaitable de proposer une machine de contrôle automatique capable de contrôler de façon précise, reproductible et rapide toutes les caractéristiques dimensionnelles de pales pour turbomachine.

### 3. OBJECTIFS DE L'INVENTION

L'invention, dans au moins un mode de réalisation, a notamment pour objectif de pallier les différents inconvénients de ces techniques de l'art antérieurs de mesure et de contrôle dimensionnel.

Plus précisément, dans au moins un mode de réalisation de l'invention, un objectif est de fournir un dispositif de contrôle tridimensionnel qui permette un contrôle dimensionnel automatique, complet et sans contact de pale pour turbomachine.

### 4. EXPOSÉ DE L'INVENTION

Dans un mode de réalisation particulier de l'invention, il est proposé un dispositif de contrôle tridimensionnel sans contact d'une pale pour turbomachine, par exemple un réacteur, une turbine, un compresseur ou une pompe, ladite pale comprenant un corps s'étendant radialement le long d'un axe principal entre un pied de pale et une tête de pale avec une hauteur définie, et comprenant une première et deuxième faces principales terminées par un bord d'attaque et un bord de fuite. Le dispositif de contrôle est tel qu'il comprend :
- des moyens de balayage de ladite pale, lesdits moyens de balayage comprenant au moins un premier couple de modules de mesure laser et des moyens d'entrainement en rotation autour de l'axe principal de ladite pale par rapport aux modules de mesure laser ou inversement et des moyens d'entrainement en translation le long de l'axe principal de ladite pale par rapport aux modules de mesure laser ou inversement ;
- des moyens de construction d'une représentation tridimensionnelle virtuelle de ladite pale à partir de données provenant desdits moyens de balayage ;
- des moyens de contrôle dimensionnel à partir de ladite représentation tridimensionnelle virtuelle reconstruite ;
- chaque couple de modules de mesure laser comprenant un premier module orienté vers une première face (F_{A}) de ladite pale et un deuxième module orienté vers une deuxième face (F_{B}) d'une pale ;
lesdits modules de mesure laser étant orientés par rapport à ladite pale de façon à ce que :
- au cours d'une rotation desdits modules ou de ladite pale autour de l'axe principal, lesdits moyens de balayage balayent les première et deuxième faces de ladite pale sur tout le pourtour de ladite pale, et
- au cours d'une translation desdits modules ou de ladite pale le long de l'axe principal, lesdits moyens de balayage balayent les première et deuxième faces de ladite pale sur toute leur hauteur.

Ainsi, grâce à un agencement astucieux d'au moins un couple de modules de mesure laser, le dispositif de contrôle tridimensionnel selon l'invention permet de réaliser de manière automatique et sans contact un balayage complet et précis de l'ensemble de la pale à contrôler. Un contrôle de l'intégralité des caractéristiques dimensionnelles de la pale peut alors être effectué à partir des points de mesure issus des moyens de balayage.

Le dispositif peut donc prévoir un mouvement simultané en rotation et en translation de la pale par rapport aux modules de mesure laser ou inversement.

Ainsi, contrairement aux solutions existantes, le dispositif selon l'invention permet de déterminer un nuage de points de mesure de la pale en trois dimensions et en quelques secondes sur l'ensemble de sa surface. En fonction de la technologie laser embarquée dans les modules de mesure et du procédé de construction de représentation tridimensionnelle et de contrôle associé, il est possible de réaliser un contrôle de pale ultra-rapide (durée comprise approximativement entre 1 et 5 secondes).

Selon un aspect particulier de l'invention, chaque module de mesure laser comprend une source d'émission d'un faisceau laser orienté par rapport à l'axe principal et par rapport à un axe tangentiel de ladite pale, et d'un récepteur de faisceau laser orienté pour capter le faisceau laser provenant de ladite pale.

Selon une caractéristique particulière, le faisceau laser est orienté par rapport à l'axe principal d'un premier angle compris entre 10 et 45 degrés et par rapport à l'axe tangentiel d'un deuxième angle compris entre 10 et 45 degrés.

Selon une caractéristique particulière, les moyens d'entrainement en rotation et les moyens d'entrainement en translation sont activés simultanément ou séquentiellement.

Ainsi, il est possible de réaliser les opérations de balayage (et donc d'acquisition des points de mesure) avec un entrainement simultané en rotation et en translation de ladite pale par rapport aux modules de mesure laser ou inversement ou avec des entrainements en rotation et en translation indépendants se succédant dans un ordre préétabli.

Selon une caractéristique particulière, les modules sont dotés d'une source d'émission laser de type ligne.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 représente une vue en perspective d'un dispositif de contrôle tridimensionnel selon un mode de réalisation particulier de l'invention ;
- les figures 2A-2C représentent des vues partielles et détaillées du dispositif de contrôle illustré à la figure 1 ;
- les figures 3A-3F sont des vues de la lame de turbine soumise à un contrôle tridimensionnel au cours de différentes phases du balayage laser tel qu'illustré aux figures 1, 2A, 2B et 2C ;
- la figure 4 présente, sous forme de blocs fonctionnels, la structure schématique d'un dispositif de contrôle tridimensionnel selon un mode de réalisation particulier de l'invention ;
- la figure 5 présente une vue détaillée d'un module de mesure en cours de balayage d'une des faces principales de la pale à contrôler.

### 6. DESCRIPTION DÉTAILLÉE

Sur toutes les figures du présent document, les éléments identiques sont désignés par une même référence numérique.

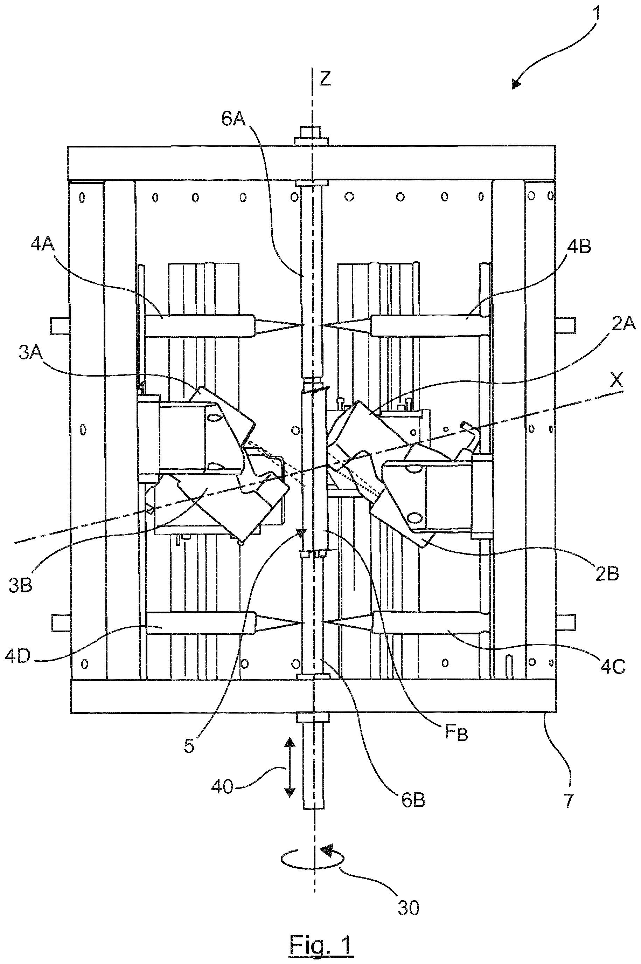

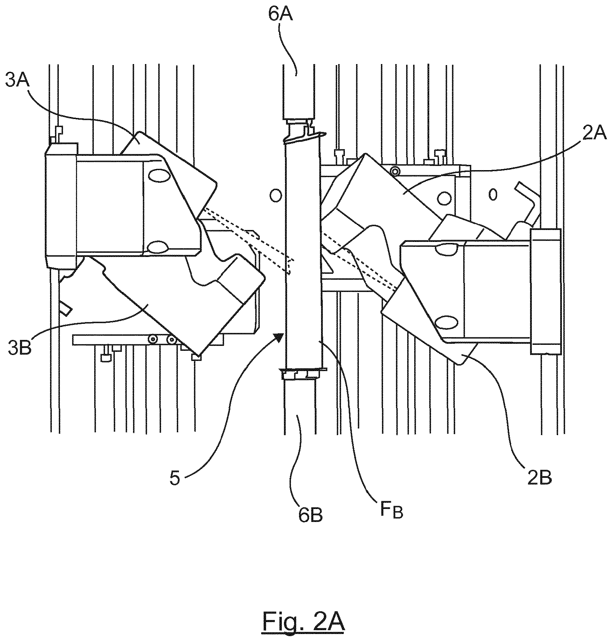

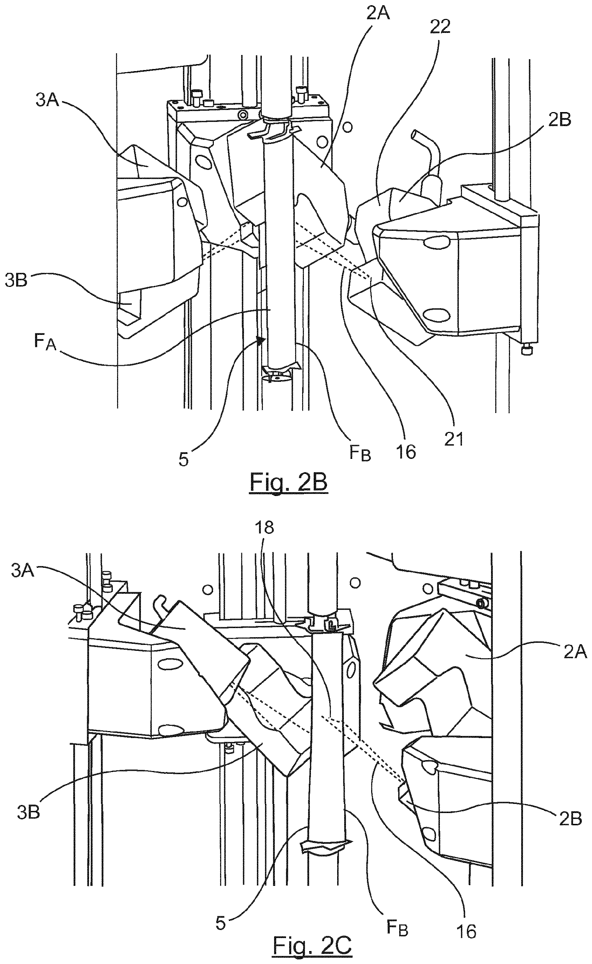

On présente en relation avec les **figures 1****,** **2A** à **2C** la structure et le fonctionnement d'un dispositif de contrôle tridimensionnel sans contact 1, selon un mode de réalisation particulier de l'invention. La pièce mécanique soumise au contrôle tridimensionnel ici est une pale de turbine ou de réacteur d'avion 5.

Bien entendu, il s'agit là d'un exemple illustratif, d'autres types de pale pour d'autres applications peuvent bien sûr être envisagés sans sortir du cadre de l'invention.

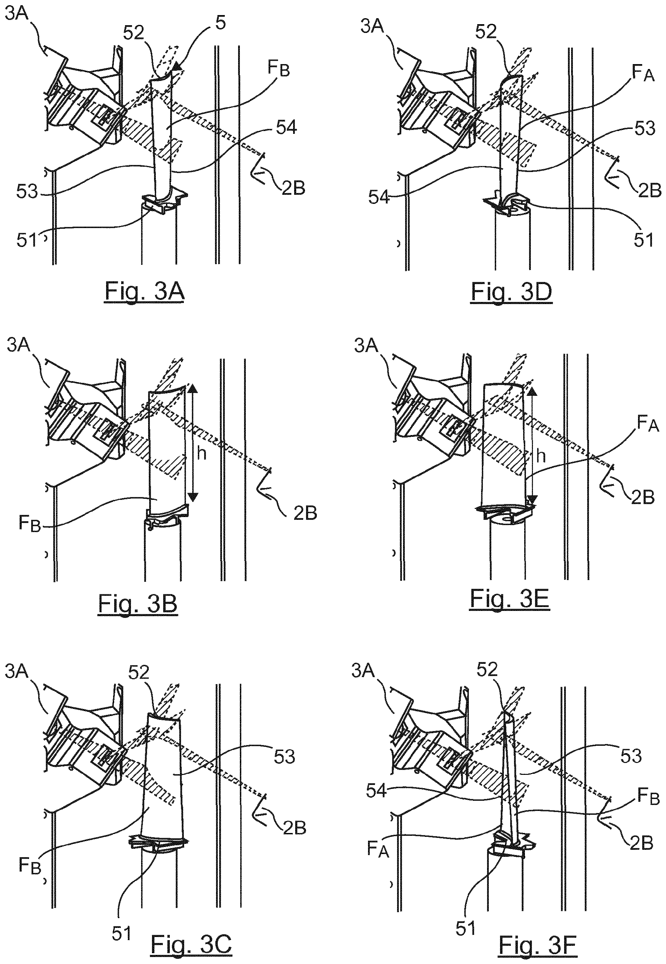

La pale comprend de manière générale un corps 50 s'étendant radialement le long d'un axe principal (Z) entre un pied de pale 51 et une tête de pale 52 avec une hauteur h définie, et comprenant une première et deuxième faces principales F_{A} et F_{B} terminées par un bord d'attaque 53 et un bord de fuite 54. La première face F_{A}, communément appelée intrados, est de forme sensiblement concave, et la seconde face F_{B} communément appelée extrados, de forme sensiblement convexe. La structure de la pale 5 est illustrée plus en détail aux figures 3A et 3F.

On emploie le terme « radialement » car une pale se compose généralement d'un corps s'étendant radialement à partir de l'organe de rotation de la turbine (axe ou moyeu par exemple).

Le dispositif de contrôle 1 comprend, dans le mode de réalisation illustré ici, deux bras verticaux 6A et 6B pour assurer le maintien de la pale 5 à contrôler au sein du bâti 7 suivant son axe principal Z. Le bras de maintien 6A maintient la pale au niveau de sa tête 51 et le bras de maintien 6B maintient la pale au niveau de son pied 52. Les deux bras de maintien 6A et 6B sont de plus montés mobiles en rotation autour de l'axe principal Z par rapport au châssis 7 du dispositif (flèche référencée 30) et mobiles en translation le long de l'axe principal Z par rapport au châssis 7 du dispositif (flèche référencée 40). Pour se faire, les deux bras de maintien 6A et 6B coopèrent avec un système d'entrainement double rotation et translation (non illustré), permettant la mise en rotation et/ou en translation de la pale 5 par rapport au bâti 7, qui lui est fixe.

Plusieurs implémentations matérielles sont possibles : par exemple le bras 6B peut coopérer avec un système d'entrainement double en rotation et translation, et le bras 6A peut coopérer avec un système d'entrainement simple en translation pour guider la pale le long de son axe principal. Pour certaines configurations de la pale, à noter que seul le bras de maintien 6B est nécessaire pour assurer l'entrainement de la pale en rotation et en translation.

Les bras 6A et 6B et le ou les systèmes d'entrainement associés forment les moyens d'entrainement en rotation et en translation du dispositif selon l'invention.

Par ailleurs, le dispositif de contrôle 1 selon l'invention met en œuvre quatre modules de mesure laser dédiés à la mesure et au contrôle de la pale 5 : un premier couple de modules de mesure laser 2A-2B dédié à une première mesure de surface de la pale 5 et un deuxième couple de modules de mesure laser 3A-3B dédié à une deuxième mesure de surface de la pale 5. Plus particulièrement, chaque couple de modules de mesure laser (2A-2B ; 3A-3B) est constitué d'un premier module (2A; 3A) orienté vers la face intrados F_{A} de la pale 5 et un deuxième module orienté vers la face extrados F_{B} de la pale 5.

Considérons l'axe X comme étant l'axe tangentiel aux faces principales et orthogonal à l'axe principal Z au niveau d'une ligne de mesure sur la pale. Ainsi, les premiers modules 2A et 3A sont sensiblement inclinés en contre haut par rapport l'axe tangentiel X de la pale 5 et les deuxièmes modules 2B et 3B sont sensiblement inclinés en contre bas par rapport à l'axe tangentiel X de la pale 5.

Chaque module de mesure laser de chacun des deux couples de modules 2A-2B et 3A-3B représentés ici est solidaire du châssis au moyen d'un support qui peut être configurable ou modulable en fonction du type de lame à contrôler et de ses caractéristiques dimensionnelles. Cela permet d'orienter chaque module de mesure convenablement en fonction de la forme et des dimensions de la pale à contrôler. L'orientation des modules de mesure laser 2A, 2B, 3A, 3B devra être adaptée en fonction de la forme et des dimensions des faces de la pale 5 et de la capacité de couverture laser (champ de mesure) des modules de mesures utilisés dans le dispositif de contrôle (la couverture laser pouvant effectivement varier de quelques millimètres à quelques centimètres en fonction de la technologie mise en œuvre par les modules de mesure). Une motorisation automatisée des supports de module pourrait être envisagée pour permettre une orientation en temps réel des modules par rapport à la surface de la pale.

Dans l'exemple illustré ici, les modules de mesure laser 2A, 2B, 3A et 3B sont fixes et c'est la pale 5 qui est mobile en rotation et en translation par rapport à l'axe principal Z de la pale 5. Bien sûr, on pourrait envisager une variante de réalisation dans laquelle la pale 5 est fixe et c'est le bâti auquel les modules de mesure sont solidairement fixés qui est monté mobile en rotation et en translation autour de l'axe principal Z de la pale 5.

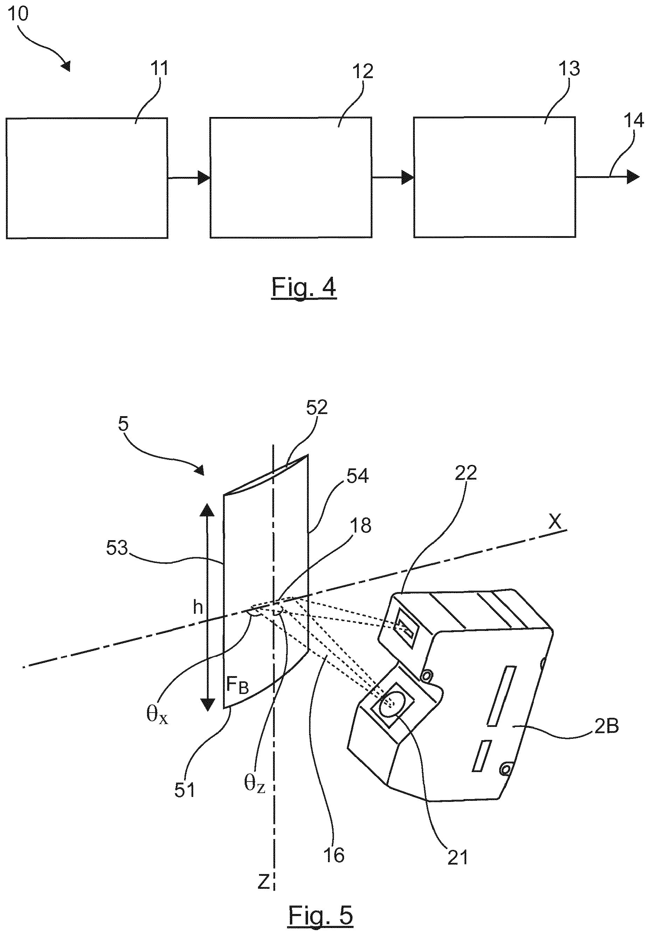

L'ensemble des modules de mesure laser illustrés ici ainsi que les moyens d'entrainement en rotation et en translation discutés plus haut constituent les moyens de balayage du dispositif selon l'invention. Les moyens de balayage sont associés à des moyens de traitement de mesures acquises par les moyens de balayage, (dont le principe est détaillé plus loin en relation avec la **figure 4****)** pour reconstruire la surface tridimensionnelle de la pale 5 et réaliser un contrôle dimensionnel de celle-ci.

Selon l'invention, les modules de mesure laser 2A, 2B, 3A et 3B sont orientés par rapport à la pale 5 de façon à ce qu'au cours d'une rotation de la pale 5 autour de son axe principal Z, les moyens de balayage balayent les faces intrados F_{A} et extrados F_{B} sur tout le pourtour de la pale (balayage sur la largeur des faces F_{A} et F_{B}) et qu'au cours d'une translation de la pale 5 le long de son axe principal Z, les moyens de balayage balayent les faces intrados F_{A} et extrados F_{B} de la pale 5 sur toute leur hauteur h.

Les figures **3A** à **3F** représentent différentes phases du processus de balayage laser de la pale de turbine 5. La **figure 5** montre plus en détail le module de mesure 2B au cours du balayage laser de la face extrados F_{B} de la pale de turbine 5.

Le module de mesure 2B est, dans cet exemple, un module de mesure laser fonctionnant selon le principe de la triangulation laser. De façon connue, un tel module de mesure est apte à mesurer une distance par calcul angulaire. Il couvre, par ailleurs, une grande plage de mesure et présente une haute résolution. D'autres technologies connues que la triangulation laser peuvent bien sûr être utilisées sans sortir du cadre de l'invention. Le module de mesure 2B comprend une source d'émission laser 21, par exemple une diode laser, qui projette un faisceau laser plan 16 sur l'une des faces des pales à balayer (face principale F_{B} ici) et un récepteur laser 22, par exemple un capteur de type CCD (pour *"Charge-Coupled Device"* en anglais) ou CMOS (pour *"Complementarity Metal-Oxide-Semiconductor"* en anglais). La source d'émission laser et le récepteur laser correspondant sont situés sur la même face du module de mesure, cette face étant orientée vers la pale 5.

Les autres modules de mesure 2A, 3A et 3B sont, de préférence, identiques. De manière générale, pour maximiser la qualité du balayage laser, les modules de mesure de chaque couple doivent être de technologie identique.

Lorsque la phase de balayage est activée, le faisceau laser émis par la source est réfléchi sur la face F_{B} de la pale dont on désire connaitre la position ou l'éloignement par rapport à la source laser (c'est-à-dire par rapport au module de mesure 2B). Le récepteur laser 22 est orienté pour capter le faisceau laser provenant de la pale 5. Le faisceau laser réfléchi atteint le récepteur 22 sous un angle qui est fonction de la distance. La position du faisceau laser réfléchi sur le récepteur 22 ainsi que la distance séparant la source et le récepteur du module de mesure 2B, permettent de déduire des informations de distance pour chaque point de mesure acquis.

L'intersection entre le faisceau laser 16 et la face F_{B} de la pale forme une ligne laser de balayage 18 qui se déplace sur la face balayée F_{B} au fur et à mesure que la pale 5 tourne autour de son axe principal Z et au fur et à mesure que la pale 5 se translate le long de son axe principal Z. Le balayage de la pale 5 sur son pourtour est assuré par la rotation de la pale par rapport aux modules de mesure autour de son axe principal Z et le balayage de la pale 5 sur toute sa hauteur est assuré grâce à la translation de la pale 5 par rapport aux modules de mesure.

De manière générale, on peut prévoir de réaliser les opérations de balayage (et donc d'acquisition des points de mesure) de la pale de turbine 5 :
- au moyen d'un entrainement simultané en rotation et en translation de la pale 5 par rapport aux modules de mesure laser 2A, 2B, 3A, 3B (ou inversement), permettant d'assurer un balayage complet de la pale 5, ou
- au moyen d'entraînements en rotation et en translation indépendants de la pale 5 par rapport aux modules de mesure laser 2A, 2B, 3A, 3B (ou inversement) se succédant dans un ordre préétabli, permettant d'assurer un balayage complet de la pale 5.

Selon un aspect particulier de l'invention, le module de mesure 2B est orienté vers la deuxième face F_{B} de sorte que le faisceau laser soit incliné vers le haut rapport à l'axe tangentiel X d'un angle θx compris entre 10 et 45 degrés (par exemple 30 degrés) et d'un angle θz par rapport à l'axe principal de rotation Z compris entre 10 et 45 degrés (par exemple 20 degrés). Les angles θx et θz dépendent notamment de l'angle d'inclinaison de la face de la pale à balayer.

Le même principe s'applique au premier module 2A du couple de module de mesure 2A et 2B, le faisceau laser dudit module 2A devant être incliné vers la bas rapport à l'axe tangentiel X de l'angle θx pour faire face à la face de pale correspondante F_{A}.

A noter que le nombre de couples de modules de mesure n'est pas limité à l'exemple illustré précédemment. Un nombre plus important (c'est-à-dire supérieur à 2) ou moins important (c'est-à-dire inférieur à 2) pourrait être envisagé sans sortir du cadre de l'invention, suivant notamment la complexité de la forme de la pale, le nombre de points de mesure souhaité et/ou du temps de traitement souhaité, et/ou d'autres paramètres que l'homme du métier jugera bon de prendre en compte.

On présente maintenant, en relation avec la **figure 4****,** sous forme de blocs fonctionnels, les caractéristiques génériques d'un dispositif de contrôle tridimensionnel 10 selon un mode de réalisation particulier de l'invention.

Le dispositif de contrôle 10 comprend des moyens de balayage de la pale à contrôler. Ces moyens de balayage sont dotés de modules de mesure laser et des moyens d'entrainement tels que décrits plus haut en relation avec la **figure 1****.**

Le dispositif de contrôle 10 comprend des moyens de construction 12 d'une représentation tridimensionnelle virtuelle de la pale à partir des données (ou points de mesure) issues des moyens de balayage 11. Pour ce faire, le dispositif de contrôle 10 met en œuvre un logiciel de traitement du nuage de points et de représentation tridimensionnelle virtuelle de la pale à contrôler. Les données issues des modules se présentent sous la forme de nuages de points de coordonnées définies dans un espace à trois dimensions. Le temps nécessaire au relevé des points est relativement court (entre 1 et 30 millions de points, selon le nombre de modules de mesure, ces points étant acquis dans un intervalle de temps compris entre 1 s et 5 s). Généralement, une unique rotation de 360 degrés de la pale (à l'altitude où une mesure de la pale est nécessaire) suffit pour acquérir l'ensemble des points de mesure nécessaires à la reconstruction 3D et au contrôle dimensionnel de la pale.

Le dispositif de contrôle 10 comprend des moyens de contrôle dimensionnel 13 de la pale en fonction de la représentation tridimensionnelle virtuelle obtenue par les moyens de construction 12. Les moyens de contrôle 13 sont configurés pour délivrer 14 au moins une grandeur représentative d'une dimension de la pale ou une information d'acceptation ou de refus de la pale soumise au contrôle en fonction du résultat du contrôle réalisé par les moyens de contrôle 13 (respect ou non des tolérances dimensionnelles et/ou géométriques imposées, etc.).

Un tel dispositif de contrôle s'intègre aisément dans une ligne de production.

Ainsi, le dispositif selon l'invention permet un contrôle automatique, complet et sans contact de pale de turbine pour aéronef, et plus généralement pour turbomachine, pouvant présenter diverses formes et dimensions.

Enfin, afin de permettre de déterminer la position de l'axe principal de la pale, le dispositif de contrôle 1 peut prévoir la présence d'un ou plusieurs modules de mesure additionnels 4A, 4B, 4C, 4D, disposés de manière fixe par rapport au bâti 7 et perpendiculaires par rapport aux bras de maintien 6A et 6B. Ceci est réalisé en activant les moyens d'entrainement en rotation et les moyens d'entrainement translation de la pale 5 de façon à balayer la surface bras de maintien 6A et 6B respectivement sur tout leur pourtour et sur une hauteur donnée.

## Revendications

1. Dispositif de contrôle tridimensionnel sans contact d'une pale (5) pour turbomachine, ladite pale comprenant un corps s'étendant radialement le long d'un axe principal (Z) entre un pied de pale et une tête de pale avec une hauteur définie, et comprenant une première et deuxième faces principales terminées par un bord d'attaque et un bord de fuite, ledit dispositif comprenant des moyens de balayage de ladite pale, des moyens de construction d'une représentation tridimensionnelle virtuelle de ladite pale à partir de données provenant des moyens de balayage et des moyens de contrôle dimensionnel à partir de ladite représentation tridimensionnelle virtuelle reconstruite, ledit dispositif étant **caractérisé en ce que** lesdits moyens de balayage comprennent :
- au moins un premier couple de modules de mesure laser (2A, 2B), des moyens d'entrainement en rotation et des moyens d'entrainement en translation, les moyens d'entrainement en rotation pour entrainer, autour de l'axe principal, ladite pale par rapport aux modules de mesure laser ou inversement, et les moyens d'entrainement en translation pour entrainer, en translation le long de l'axe principal, ladite pale par rapport aux modules de mesure ou inversement,
dans lequel chaque module de mesure laser (2A, 2B) comprend une source d'émission d'un faisceau laser et un récepteur de faisceau laser, le faisceau laser orienté par rapport à l'axe principal (Z) et par rapport à un axe tangentiel (X) de ladite pale, et le récepteur de faisceau laser orienté pour capter le faisceau laser provenant de ladite pale, le premier module de mesure laser orienté de sorte que son faisceau laser soit incliné vers le bas par rapport à une première face (F_{A}) de ladite pale, le second module de mesure laser orienté de sorte que son faisceau laser soit incliné vers le haut par rapport à une seconde face (F_{B}) de ladite pale, les premier et deuxième modules de mesure laser orientés par rapport aux première et deuxième face (F_{A} ; F_{B}) de ladite pale de façon à ce que :
au cours d'une rotation desdits modules ou de ladite pale autour de l'axe
principal, lesdits moyens de balayage balayent les première et deuxième faces de ladite pale sur tout le pourtour de ladite pale, et
au cours d'une translation desdits modules ou de ladite pale le long de l'axe principal, lesdits moyens de balayage balayent les première et deuxième faces de ladite pale sur toute leur hauteur ;
- au moins un bras de maintien vertical (6A, 6B) pour maintenir ladite pale et au moins un
module de mesure laser additionnel (4A, 4B, 4C, 4D), orienté perpendiculairement audit au moins un bras de maintien, ledit au moins un bras de maintien s'étendant le long de l'axe principal (Z) et coopérant avec lesdits moyens d'entrainement en rotation et en translation, de sorte que, pour réaliser une mesure de position de l'axe principal :
au cours d'une rotation de ladite pale autour de l'axe principal, ledit au moins un module de mesure laser additionnel balaye la surface dudit au moins un bras de maintien sur son pourtour, et
au cours d'une translation de ladite pale le long de l'axe principal ledit au moins un module de mesure laser additionnel balaye la surface dudit au moins un bras
de maintien sur une hauteur donnée,
et **en ce que** lesdits moyens de construction tiennent compte de la mesure de position de l'axe principal.

2. Dispositif selon la revendication 1, dans lequel le faisceau laser est orienté par rapport à l'axe principal d'un premier angle compris entre 10 et 45 degrés et par rapport à l'axe tangentiel d'un deuxième angle compris entre 10 et 45 degrés.

3. Dispositif selon la revendication 1 ou 2, dans lequel les moyens d'entrainement en rotation et les moyens d'entrainement en translation sont activés simultanément ou séquentiellement.

4. Dispositif selon l'une quelconque des revendications 1 à 3, dans lequel les modules sont dotés d'une source d'émission laser de type ligne.

5. Dispositif selon l'une quelconque des revendications 1 à 4, comprenant en outre un bâti (7) sur lequel ledit au moins un module de mesure laser additionnel (4A, 4B, 4C, 4D) est fixé.

6. Dispositif selon la revendication 5, dans lequel chaque module de mesure laser (2A, 2B) est solidaire du bâti (7).

## Patentansprüche

1. Eine Vorrichtung zur berührungslosen dreidimensionalen Kontrolle einer Schaufel (5) für eine Turbomaschine, wobei die Schaufel einen Körper beinhaltet, der sich radial entlang einer Hauptachse (Z) zwischen einem Schaufelfuß und einem Schaufelkopf mit einer definierten Höhe erstreckt, und eine erste und eine zweite Fläche beinhaltet, die in einer Vorderkante und einer Hinterkante enden, wobei die Vorrichtung Mittel zum Abtasten der Schaufel, Mittel zur Konstruktion einer virtuellen dreidimensionalen Darstellung der Schaufel anhand von von den Abtastmitteln stammenden Daten und Mittel zur Dimensionskontrolle anhand der rekonstruierten virtuellen dreidimensionalen Darstellung beinhaltet, wobei die Vorrichtung **dadurch gekennzeichnet ist, dass** die Abtastmittel Folgendes beinhalten:
- mindestens ein erstes Paar von Lasermessmodulen (2A, 2B), Rotationsantriebsmitteln und Translationsantriebsmitteln, wobei die Rotationsantriebsmittel zum Antreiben der Schaufel, um die Hauptachse herum, in Bezug auf die Lasermessmodule oder umgekehrt dienen und die Translationsantriebsmittel zum translatorischen Antrieb der Schaufel, entlang der Hauptachse, in Bezug auf die Messmodule oder umgekehrt dienen,
wobei jedes Lasermessmodul (2A, 2B) eine Quelle zum Emittieren eines Laserstrahls und einen Laserstrahlempfänger beinhaltet, wobei der Laserstrahl in Bezug auf die Hauptachse (Z) und in Bezug auf eine Tangentialachse (X) der Schaufel ausgerichtet ist, und wobei der Laserstrahlempfänger ausgerichtet ist, sodass er den von der Schaufel stammenden Laserstrahl aufnimmt, das erste Lasermessmodul ausgerichtet ist, sodass sein Laserstrahl in Bezug auf eine erste Fläche (F_{A}) der Schaufel nach unten geneigt ist, das zweite Lasermessmodul ausgerichtet ist, sodass sein Laserstrahl in Bezug auf eine zweite Fläche (F_{B}) der Schaufel nach oben geneigt ist, wobei das erste und das zweite Lasermessmodul in Bezug auf die erste und die zweite Fläche (F_{A}; F_{B}) der Schaufel ausgerichtet sind, sodass:
während einer Rotation der Module oder der Schaufel um die Hauptachse herum die Abtastmittel die erste und die zweite Fläche der Schaufel um den ganzen Umfang der Schaufel herum abtasten, und
während einer Translation der Module oder der Schaufel entlang der Hauptachse die Abtastmittel die erste und die zweite Fläche der Schaufel über ihre gesamte Höhe hinweg abtasten;
- mindestens einen vertikalen Haltearm (6A, 6B) zum Halten der Schaufel und mindestens ein zusätzliches Lasermessmodul (4A, 4B, 4C, 4D), das senkrecht zu dem mindestens einen Haltearm ausgerichtet ist, wobei sich der mindestens eine Haltearm entlang der Hauptachse (Z) erstreckt und mit den Rotationsantriebsmitteln und den Translationsantriebsmitteln zusammenwirkt, sodass zur Durchführung einer Positionsmessung der Hauptachse:
während einer Rotation der Schaufel um die Hauptachse das mindestens eine zusätzliche Lasermessmodul die Oberfläche des mindestens einen Haltearms um seinem Umfang herum abtastet, und
während einer Translation der Schaufel entlang der Hauptachse des mindestens einen zusätzlichen Lasermessmoduls die Oberfläche des
mindestens einen Haltearms über eine gegebene Höhe abtastet,
**und dadurch, dass** die Konstruktionsmittel die Positionsmessung der Hauptachse berücksichtigen.

2. Vorrichtung gemäß Anspruch 1, wobei der Laserstrahl in Bezug auf die Hauptachse in einem ersten Winkel zwischen 10 und 45 Grad und in Bezug auf die Tangentialachse in einem zweiten Winkel zwischen 10 und 45 Grad ausgerichtet ist.

3. Vorrichtung gemäß Anspruch 1 oder 2, wobei die Rotationsantriebsmittel und die Translationsantriebsmittel gleichzeitig oder nacheinander aktiviert werden.

4. Vorrichtung gemäß einem der Ansprüche 1 bis 3, wobei die Module mit einer linienartigen Laseremissionsquelle versehen sind.

5. Vorrichtung gemäß einem der Ansprüche 1 bis 4, die ferner einen Rahmen (7) beinhaltet, an dem das mindestens eine zusätzliche Lasermessmodul (4A, 4B, 4C, 4D) befestigt ist.

6. Vorrichtung gemäß Anspruch 5, wobei jedes Lasermessmodul (2A, 2B) mit dem Rahmen (7) integral ist.

## Claims

1. A device for the three-dimensional non-contact control of a blade (5) for a turbomachine, said blade comprising a body extending radially along a main axis (Z) between a blade root and a blade tip with a defined height, and comprising first and second main faces terminated by a leading edge and a trailing edge, said device comprising means for scanning said blade, means for constructing a virtual three-dimensional representation of said blade from data originating from the scanning means and the means for dimensionally controlling said reconstructed virtual three-dimensional representation, said device being **characterised in that** said scanning means comprise:
- at least one first pair of laser measurement modules (2A, 2B), rotational drive means and translational drive means, the rotational drive means for driving, about the main axis, said blade relative to the laser measurement modules or vice versa, and the translational drive means for driving, in translation along the main axis, said blade relative to the measurement modules or vice versa,
wherein each laser measurement module (2A, 2B) comprises a source for emitting a laser beam and a laser beam receiver, the laser beam being oriented with respect to the main axis (Z) and with respect to a tangential axis (X) of said blade, and the laser beam receiver being oriented to capture the laser beam originating from said blade, the first laser measurement module being oriented in such a way that its laser beam is angled downwards with respect to a first face (F_{A}) of said blade, the second laser measurement module being oriented in such a way that its laser beam is angled upwards with respect to a second face (F_{B}) of said blade, the first and second laser measurement modules being oriented with respect to the first and second faces (F_{A}; F_{B}) of said blade so that:
during a rotation of said modules or said blade about the main axis, said scanning means scan the first and second faces of said blade around the entire periphery of said blade, and
during a translation of said modules or said blade along the main axis, said scanning means scan the first and second faces of said blade over their entire height;
- at least one vertical holding arm (6A, 6B) for holding said blade and at least one additional laser measurement module (4A, 4B, 4C, 4D), oriented perpendicularly to said at least one holding arm, said at least one holding arm extending along the main axis (Z) and cooperating with said rotational and translational drive means, so that, in order to carry out a positional measurement of the main axis:
during a rotation of said blade about the main axis, said at least one additional laser measurement module scans the surface of said at least one holding arm around its periphery, and
during a translation of said blade along the main axis, said at least one additional laser measurement module scans the surface of said at least one
holding arm over a given height,
**and in that** said construction means take into account the positional measurement of the main axis.

2. The device according to Claim 1, wherein the laser beam is oriented relative to the main axis by a first angle of between 10 and 45 degrees and relative to the tangential axis by a second angle of between 10 and 45 degrees.

3. The device according to Claim 1 or 2, wherein the rotational drive means and the translational drive means are activated simultaneously or sequentially.

4. The device according to any one of Claims 1 to 3, wherein the modules are equipped with a line-type laser emission source.

5. The device according to any one of Claims 1 to 4, furthermore comprising a frame (7) to which said at least one additional laser measurement module (4A, 4B, 4C, 4D) is attached.

6. The device according to Claim 5, wherein each laser measurement module (2A, 2B) is integral with the frame (7).
